Europäisches Patentamt

European Patent Office

Office européen des brevets

(19)

(11) **EP 1 086 537 B1**

(12) **EUROPÄISCHE PATENTSCHRIFT**

(45) Veröffentlichungstag und Bekanntmachung des Hinweises auf die Patenterteilung:
**24.04.2002 Patentblatt 2002/17**

(21) Anmeldenummer: **99929123.0**

(22) Anmeldetag: **01.06.1999**

(51) Int Cl.⁷: **H04B 7/08**, H04Q 7/36

(86) Internationale Anmeldenummer:
**PCT/EP99/03774**

(87) Internationale Veröffentlichungsnummer:
**WO 99/65159 (16.12.1999 Gazette 1999/50)**

(54) **VERFAHREN UND VORRICHTUNG FÜR EIN VOLLDUPLEXFÄHIGES FUNKÜBERTRAGUNGSSYSTEM MIT CDMA-ZUGRIFF**

METHOD AND DEVICE FOR A FULL-DUPLEX RADIO TRANSMISSION SYSTEM WITH CDMA ACCESS

PROCEDE ET DISPOSITIF POUR SYSTEME DE TRANSMISSION RADIO A MODE D'EXPLOITATION DUPLEX A ACCES DE TYPE AMCR

(84) Benannte Vertragsstaaten:
**DE ES FR GB GR SE**

(30) Priorität: **08.06.1998 DE 19825536**

(43) Veröffentlichungstag der Anmeldung:
**28.03.2001 Patentblatt 2001/13**

(73) Patentinhaber: **Q-cell GmbH**
**07739 Jena (DE)**

(72) Erfinder:
• **HACHENBERGER, Andreas**
**D-01478 Weixdorf (DE)**
• **JÄCKEL, Klaus**
**D-12623 Berlin (DE)**
• **REIBE, Mathias**
**D-06844 Dessau (DE)**
• **SCHIFFEL, Reinhard**
**D-14621 Schönwalde (DE)**
• **SEIDEL, Joachim**
**D-12679 Berlin (DE)**

(74) Vertreter: **Effert, Bressel und Kollegen**
**Radickestrasse 48**
**12489 Berlin (DE)**

(56) Entgegenhaltungen:
**EP-A- 0 352 787        EP-A- 0 454 368**
**WO-A-97/23063          US-A- 5 515 378**

## Beschreibung

Die Erfindung betrifft ein Verfahren und eine Vorrichtung für ein vollduplexfähiges Funkübertragungssystem mit DS-CDMA-Zugriff, mit einer zentralen Funkbasisstation und einer Vielzahl voneinander unabhängiger Teilnehmerstationen.

Im Bereich der funkgestützten Informationssysteme, die mit einer zentralen Funkbasisstation und einer Vielzahl voneinander unabhängiger Außen- oder Teilnehmerstationen arbeiten, und die vollduplexmäßig eine Informationsübertragung in beiden Richtungen gestatten, werden die für die einzelnen Nutzer bestimmten Informationen im downlink häufig in einen Nachrichtenkanal gemultiplext und im uplink als Zugriffssystem organisiert übertragen. Beispiele für derartige Systeme sind Mobilfunksysteme, Bündefunksysteme, Point-to-Multipoint-Richffunksysteme und Wireless Local Loop Systeme. Für das Multiplexen bzw. den Mehrfachzugriff kommen jeweils untereinander orthogonale Signalräume zur Anwendung, wie beispielsweise

- Frequenz-Multiplex- bzw. Zugriffsysteme FDMA (frequence division multiple access)
- Zeit-Multiplex- bzw. Zugriffsysteme TDMA (time division multiple access)
- Code-Multiplex- bzw. Zugriffsysteme CDMA (code division multiple access) bzw. SSMA (spread spectrum multiple access).
- Raum-Multiplex- bzw. Zugriffsysteme

Die Systeme unterscheiden sich dadurch, daß die Informationsübertragung von und zu den einzelnen Nutzern in getrennten Frequenz-, Zeit-,Code bzw. Raumsegmentlagen erfolgt. Auch geschachtelte, verkoppelte oder jeweils unterschiedliche Multiplex- und Zugriffstechnologien innerhalb eines Systems, sogenannte hybride Verfahren, sind bekannt geworden. Je nach Anwendung und Realisierung sind mit diesen Verfahren unterschiedliche Parameter und Gütekriterien der Übertragung erzielbar.

EP-0 734 194 A offenbart ein Funkübertragungssystem mit Selector antennen gemäß dem Stand der Technik.

Bei CDMA-Systemen wird das Nutzsignal durch Verknüpfung mit einer Spreizfunktion codiert, wobei für jede Teilnehmerstation eine eigene, zu den anderen Spreizfunktionen orthogonale Spreizfunktion gewählt wird. Die Verknüpfung erfolgt dabei beispielsweise mittels eines X-OR-Gatters. Empfängerseitig kann dann durch Kenntnis der zugeordneten Spreizfunktion das codierte Signal demoduliert werden, wobei aufgrund der Orthogonalität die codierten Nutzdaten für andere Teilnehmerstationen beim Demodulationsprozeß zu Null werden. Besonders vorteilhaft an CDMA-Systemen ist, daß alle Nutzer im gleichen Frequenzband arbeiten können und eine relative hohe Störleistung im Band toleriert werden kann. Des weiteren ist es unter bestimmten Bedingungen möglich, daß benachbarte Funkzellen auf dem gleichen Frequenzband arbeiten können. Nachteilig gestaltet sich im allgemeinen die Multiuserinteferenz, die in der Praxis durch Implementierungsprobleme wie Bandbegrenzung, Pegelunterschiede zwischen den einzelnen Sendungen, Mehrwegausbreitung usw. entsteht und zu einem Orthogonalitätsverlust führt. Bei den betrachteten Funksystemen ist grundsätzlich zu beachten, daß wegen der unterschiedlichen Signallaufzeiten durch unterschiedliche Entfernungen der Außenstationen von der Zentralstation im Basisstationsempfänger in der Regel eine asynchrone Empfangssituation gegeben ist, die diese Interferenzen erheblich so verschärft, daß dann auch unter idealen Bedingungen keine Codeorthogonalität im uplink gegeben ist. In diesem Fall läßt sich die maximale Anzahl gleichzeitiger Sendungen M innerhalb eines Frequenzbandes im uplink näherungsweise eines DS-CDMA-Systems wie folgt abschätzen:

$$M = PG / (E_b/N_0),$$

wobei PG der Prozeßgewinn bzw. Spreizfaktor und $E_b/N_0$ das für die angestrebte Bitfehlrate notwendige Verhältnis von Bitenergie zur Störleistung am Demodulator ist. Der Spreizfaktor ist das Verhältnis von $t_{bit}$ zu $t_{chip}$ und liegt typischerweise zwischen $10^1$ und $10^4$.

Bei einem beispielsweise angenommenen $E_b/N_0$ von 3, was ca. 5 dB entspricht, steht damit bezogen auf eine gleiche belegte Bandbreite im uplink nur ca. 1/3 der Übertragungskapazität gegenüber dem downlink bzw. gegenüber TDMA- oder FDMA-Systemen zur Verfügung, wenn man für letztere orthogonale Signale annimmt.

Es sind verschiedene Verfahren bekannt, die den zuvor beschriebenen Nachteil der asynchronen CDMA-Verfahren verringern, beispielsweise die Synchronisation der Außenstation derart, daß ihre Sendungen chipsynchron im Empfänger der Basisstation verarbeitet werden können. Weiter wurde die Implementierung von Interferencecancelern vorgeschlagen, die den Interferenzanteil der parallelen Übertragungen aufgrund verschiedener a priori - oder a posteriori - Kenntnisse durch mathematische Algorithmen nachträglich eliminieren. Des weiteren ist auch der Einsatz von Multiuser-Detektoren vorgeschlagen worden. Nachteilig an all diesen bekannten Verfahren ist die sehr aufwendige Implementierung.

Der Erfindung liegt daher das technische Problem zugrunde, ein Verfahren und eine Vorrichtung für ein vollduplexfähiges Funkübertragungssystem mit DS-CDMA-Zugriff zu schaffen, bei der das Verhältnis von uplink- zu downlink-Übertragungskapazität verbessert wird.

Die Lösung des technischen Problems ergibt sich durch die Merkmale der Patentansprüche 1 und 5. Durch die Unterteilung der Empfangsantenne in ihrer horizontalen Antennencharakteristik in mehrere Empfangssegmente, die jeweils mit einer Bewertungseinheit verbunden sind, mittels derer teilnehmerbezogen das Empfangssegment mit der besten Empfangsqualität ermittelbar und für die weitere Datenverarbeitung auswählbar ist, wird der Interferenzeinfluß von anderen, gleichzeitig sendenden Teilnehmerstationen erheblich reduziert, da angenommen werden kann, daß alle Teilnehmer annähernd räumlich gleichverteilt im Einflußbereich der Basisstationsempfangsantennensegmente disloziiert sind und es auch keine ausgeprägte Korrelation zwischen Teilnehmerlokation und paralleler Sendung gibt. Demzufolge hängt die Güte der Trennung der einzelnen Empfangszüge im wesentlichen davon ab, welche Überkopplung durch die konkrete Charakteristik der Antennen zustandekommt, welche Interferenzen durch Mehrwegausbreitung in die Bereiche der jeweils anderen Antennenöffnungen fallen und wieviele Teilnehmer statistisch und momentan betrachtet im Raumsegment einer Antenne gleichzeitig senden. Weitere vorteilhafte Ausgestaltungen der Erfindung ergeben sich aus den Unteransprüchen.

Die Erfindung wird nachfolgend anhand eines bevorzugten Ausführungsbeispiels näher erläutert. Die Fig. zeigen:

Fig. 1      ein schematische Blockschaltbild eines Funksystems mit einer zentralen Funkbasistation (Stand der Technik),

Fig. 2      ein Blockschaltbild der Funkbasistation für den Sendebetrieb,

Fig. 3      ein Signalverlauf für eine Spreizfunktion, ein Nutzsignal und ein codiertes Signal,

Fig. 4      eine Unterteilung der horizontalen Antennencharakteristik,

Fig. 5      ein Blockschaltbild der Funkbasis im Empfangsbetrieb,

Fig. 6      ein Blockschaltbild für eine gemeinsame Sende-Empfangsantenne der Funkbasisstation und

Fig. 7a-b      Signalverläufe mit Testsequenzen.

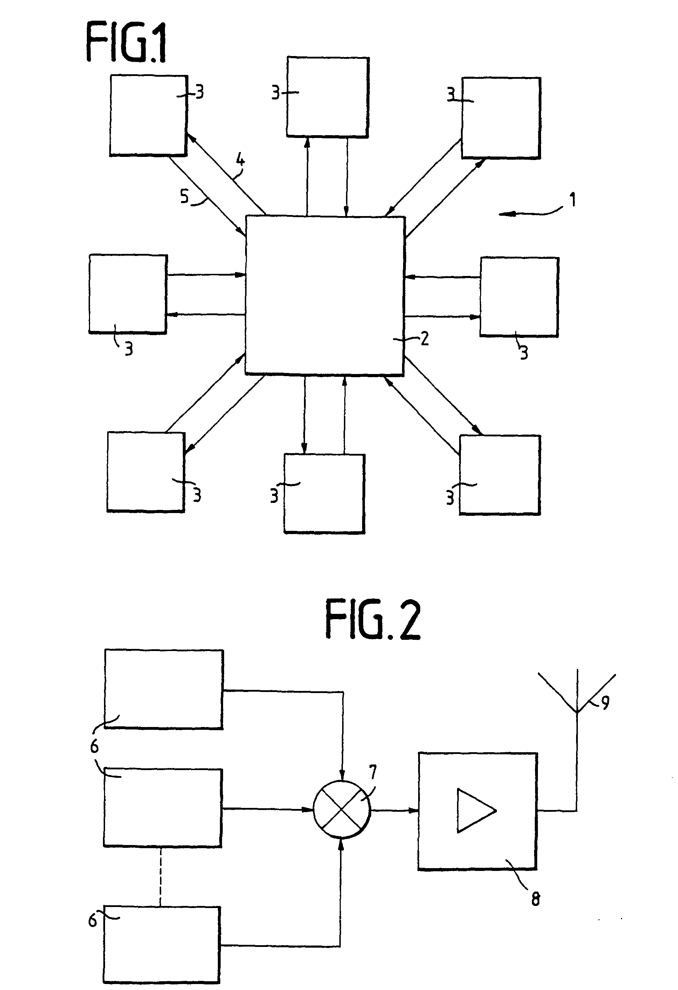

In der Fig. 1 ist schematisch in Funksystem 1 dargestellt, das eine zentrale Funkbasisstation 2 und eine Vielzahl von unabhängigen Teilnehmerstellen 3 umfaßt. Das Funksystem 1 ist vollduplexmäßig ausgebildet, d.h. jede Teilnehmerstation 3 kann Nutzdaten senden und empfangen ebenso wie die Funkbasisstation 2. Dabei wird die Senderichtung 4 von der Funkbasisstation 2 zu einer Teilnehmerstation 3 als downlink und die Sendeeinrichtung 5 von den Teilnehmerstationen 3 zu der Funkbasisstation 2 als uplink bezeichnet. Im downlink müssen die Nutzdaten für jede Teilnehmerstation 3 speziell codiert werden, so daß die Teilnehmerstation 3 die für sie bestimmten Daten erkennen und weiterleiten kann. Die Codierung erfolgt in DS-CDMA-Modulatoren 6, wobei jeder Teilnehmerstation 3 mindestens ein DS-CDMA-Modulator 6 in der Funkbasisstation 2 zugeordnet ist. Die derart codierten Signale werden einem Summationsglied 7 zugeführt und über einen Sender 8 mit zugehöriger Sendeantenne 9 abgestrahlt.

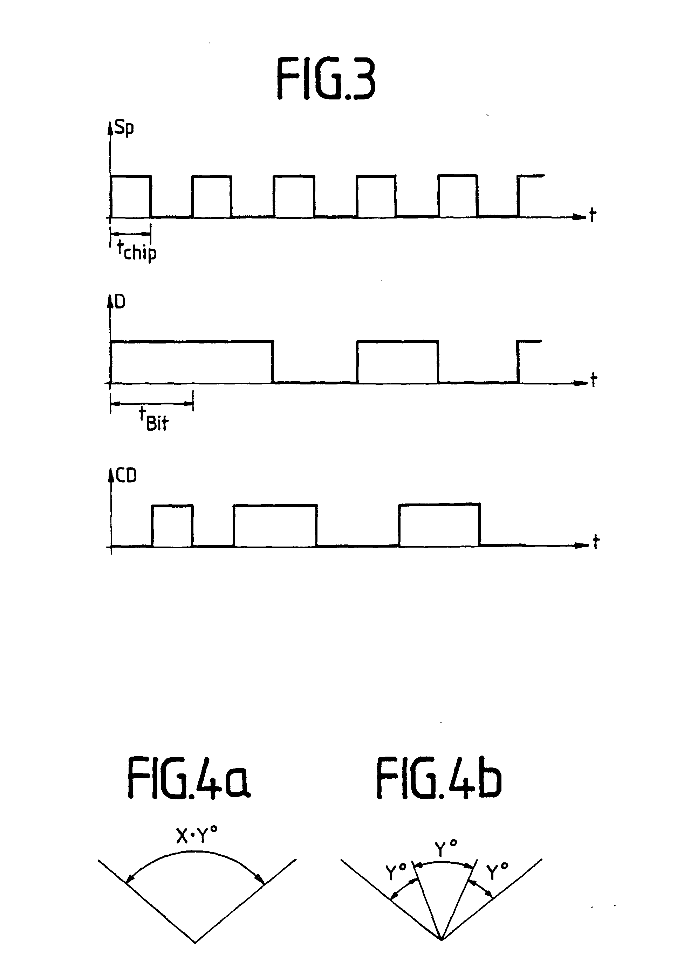

In der Fig. 3 ist beispielhaft eine Spreizfunktion Sp dargestellt, die im dargestellten Beispiel eine Impulsfolge mit der halben Periodendauer $t_{chip}$ ist. Das eigentliche Nutzsignal D mit der halben Periodendauer $t_{Bit}$ wird mit der Spreizfunktion Sp verknüpft, so daß ein codiertes Nutzsignal CD entsteht. Anschaulich stellt das codierte Nutzsignal CD das Ausgangssignal eines X-OR-Gatters mit den beiden Eingangsgrößen Sp und D dar.

In der Fig. 4a ist beispielhaft die horizontale Antennencharakteristik der Sendeantenne 9 mit einem Öffnungswinkel X · Y° dargestellt, wobei X das Verhältnis der downlink zur uplink-Übertragungskapazität ist. Insgesamt muß die Empfangsantenne der Funkbasisstation 2 den gleichen Öffnungswinkel X · Y° aufweisen, wobei diese jedoch im Verhältnis X segmentiert bzw. partioniert ist, was in Fig. 4b graphisch für X = 3 dargestellt ist.

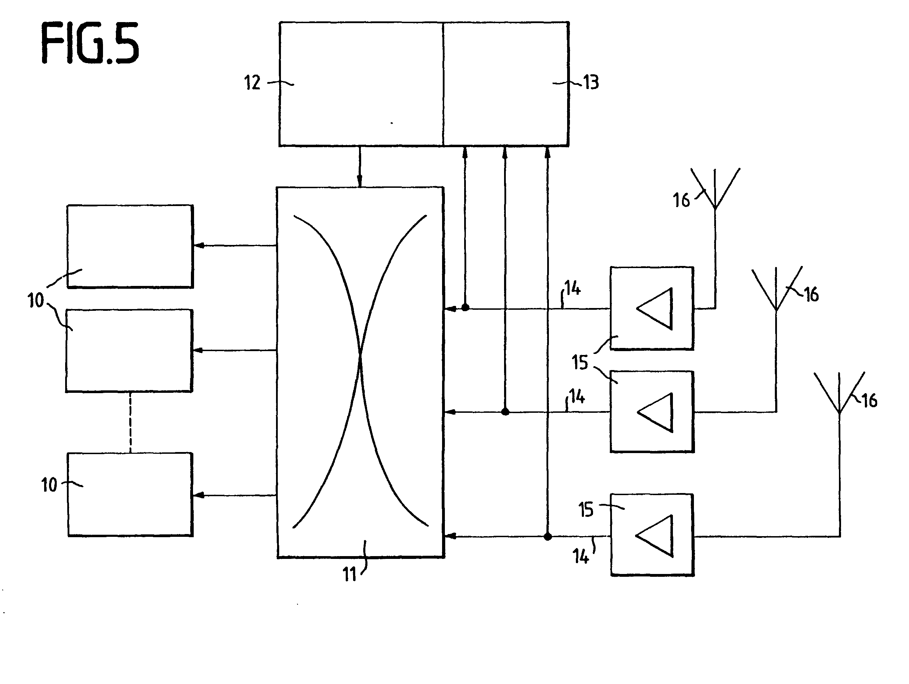

In der Fig. 5 ist der Empfangszweig der Funkbasisstation 2 dargestellt. Dieser umfaßt DS-CDMA Demodulatoren 10, eine Schaltmatrix 11, einen Controller 12, eine Bewertungseinheit 13, einen digitalen Empfangsbus 14, Empfänger 15 und Empfangsantennen 16. Die Empfangsantennen 16 haben zusammen die gleiche horizontale Antennencharakteristik wie die Sendeantenne 9. Bei drei Empfangsantennen 16 weist beispielsweise jede Empfangsantenne 16 einen Öffnungswinkel von 120° auf, so daß die Funkbasisstation 2 horizontal vollkommen abgedeckt ist. Jede Empfangsantenne 16 ist mit einem Empfänger 15 verbunden. Jeder Empfänger 15 umfaßt einen Eingangsverstärker, einen Downconverter und einen Digitalisierer. Ausgangsseitig ist jeder Empfänger 15 über einen digitalen Bus 14 mit der Bewertungseinheit 13 und der Schaltmatrix 11 verbunden. Die Schaltmatrix 11 wird über den Controller 12 gesteuert und ist ausgangsseitig mit den DS-CDMA Demodulatoren 10 verbunden. Die Anzahl der DS-CDMA-Demodulatoren 10 entspricht dabei der Anzahl der gleichzeitig aktiven Teilnehmerstationen 3. Im uplink-Betrieb empfängt nun jede Empfangsantenne 16 Signale von Teilnehmerstationen 3, die innerhalb seiner Empfangscharakteristik abstrahlen, wobei Signale von einer Teilnehmerstation 3 von mehreren Empfangsantennen 16 empfangen werden können. Diese von den Empfängern 15 aufbereiteten Signale werden dann der Bewertungseinheit 13 zugeführt. Die Bewertungseinheit 13 ermittelt nun sukzessive für jede einzelne Teilnehmerstation 3, mit welcher Empfangsantenne 16 das Signal von der Teilnehmerstation 3 am besten empfangen wurde. Die Ergebnisse werden dann von der Bewertungseinheit 13 an den Controller 12 übergeben, der dann die Schaltmatrix 11 entsprechend den Ergebnissen ansteuert, so daß jedem DS-CSMA-Demodulator 10 die für ihn beste Empfangsantenne 16 zugeordnet wird.

Da durch die Auswahl des besten Empfangszweiges keine Nutzdaten verloren gehen dürfen, kann der Beginn des Empfanges parallel betrieben werden, bis die Auswahl getroffen wurde. Vorzugsweise wird jedoch die Auswahl bereits vor Empfang der eigentlichen Nutzdaten vorgenommen. Dazu sendet vor Beginn der Nutzsendung jede Teilnehmerstation 3 eine signifikante Testfrequenz, die dann ausgewertet werden kann.

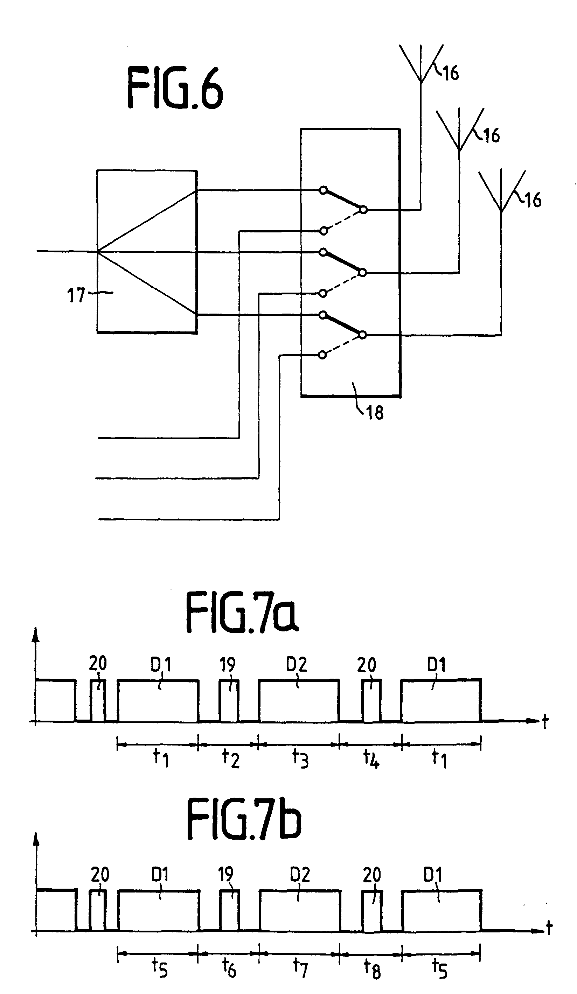

Die segmentweise Unterteilung der Empfangscharakteristik kann durch verschiedene Maßnahmen realisiert werden. Zum einen können separate Sende- und Empfangsantennen verwendet werden, wobei dann die Empfangsantennen als x-separate Antennen ausgebildet sind. In der Fig. 6 ist eine Ausführungsform mit x-separaten Antennen 16 dargestellt, die gleichzeitig auch als Sendeantenne verwendet werden. In dieser Ausführungsform werden im Sendebetrieb alle x Antennen 16 parallel betrieben, wobei die gleichmäßige Leistungszufuhr mittels eines Leistungsteilers 17 gewährleistet wird. Die Umschaltung zwischen Sende- und Empfangsbetrieb erfolgt dabei mittels eines TX-RX-Switch-Moduls 18, das zwischen dem Leistungsträger 17 und den Empfangsantennen 16 angeordnet ist. Im dargestellten Beispiel ist das TX-RX-Switch Modul 18 auf Sendebetrieb eingestellt, d.h. die Empfangsantennen 16 sind mit den Ausgängen der Leistungsteiler verbunden. Der gestrichelt dargestellte Zustand entspricht dem Empfangsbetrieb, bei dem die Empfangsantennen 16 mit den hier nicht dargestellten Empfängern 15 verbunden sind. Weiter können auch strahlgesteuerte Antennen bzw. Smart-Antennen benutzt werden. Bei diesen Antennen kann die Abstrahlcharakteristik verändert werden. Dabei erfolgt die Aufprägung der Richtungsinformation über eine basis-bandmäßige Wichtung und geeignete Zusammenschal-tung der einzelnen Empfangszweige. Letztendlich läßt sich dadurch der antennentechnische Aufwand bei gleichzeitiger Erhöhung der Vielfalt und Flexibilität bei der Einstellung bestimmter Antennenpattern verbessern.

Wie bereits ausgeführt, erfolgt die Bewertung der Empfangsgüte bevorzugt mittels einer Testsequenz vor der eigentlichen Nutzdatenübertragung. Besonders günstig läßt sich die Testsequenz in einem Time Division Duplex-Modus realisieren. Da der Interferenzpegel bei vielen parallelen Sendungen zu hoch sein kann, um eine zuverlässige diesbezügliche Information zu gewinnen, wird die Totzeit zwischen Sendung und Empfang etwas verlängert und dafür genutzt. daß eine den Verbindungsaufbau (kommend oder gehend) anstrebende Teilnehmerstation 3 zunächst eine Testsequenz sendet. Diese Testsequenz wird in allen x-Empfangszweigen ausgewertet, beispielsweise mittels eines Matched Filters. Anhand des Empfangsergebnisses wird genau der Zweig für den Empfang ausgewählt, der die besten Ergebnisse geliefert hat. Je nach Anzahl und Verkehrsverhalten der Teilnehmerstationen 3 müssen geeignete Maßnahmen getroffen werden, um Kollisionen durch parallele Sendungen der Testfrequenz durch verschiedene Teilnehmerstationen 3 zu vermeiden bzw. deren Auswirkungen zu minimieren. Die kann beispielsweise durch Pollingverfahren und Sendung von teilnehmerspezifischen Quittungen erreicht werden.

In der Fig. 7a ist ein solcher Zyklus für die Funkbasisstation 2 dargestellt. Im Zeitraum $t_1$ empfängt die Funkbasisstation 2 Daten D1 von den Teilnehmerstationen 3, In dem Zeitraum $t_2$, der Totzeit, wird eine Testsequenz 19 von der Funkbasisstation 2 gesendet, wobei vorzugsweise pro Zyklus eine für eine bestimmte Teilnehmerstation 3 oder eine Gruppe von Teilnehmerstationenen 3 signifikante Testsequenz 19 gesendet wird. Anschließend, im Zeitraum $t_3$, findet dann die Nutzdatenübertragung von Daten D2 an die Teilnehmerstationen 3 statt. In der anschließenden Totzeit $t_4$ empfängt dann die Funkbasisstation 2 eine Testsequenz 20 von einer oder den Teilnehmerstationen 3, bevor der Zyklus von neuem beginnt. In der Fig. 7b ist ein solcher Zyklus für eine Teilnehmerstation 3 dargestellt. Im Zeit-raum $t_5$ sendet die Teilnehmerstation 3 Daten D1 an die Funkbasisstation 2. In der Totzeit $t_6$ wird die Testse-quenz 19 der Funkbasisstation 2 empfangen und dann anschließend im Zeitraum $t_7$ die von der Funkbasissta-tion 2 gesendeten Nutzdaten D2 empfangen. In der an-schließenden Totzeit $t_8$ wird dann die Testsequenz 20 an die Funkbasisstation 2 gesendet und daran anschließend Daten D1 gesendet. Primäre Funktion der Testsequenz 20 ist die Ermittlung des besten Empfangszweiges in der Funkbasisstation 2 für Sendungen von einer bestimmten Teilnehmerstation 3. Mittels der Testsequenzen 19, 20 lassen sich jedoch auch die Teilnehmerstationen 3 synchronisieren, um Laufzeitunterschiede zwischen den einzelnen Teilnehmerstationen 3 zu kompensieren.

Bevorzugt läßt sich das Verfahren und die Vorrichtung in Wireless Local Loop-Systemen implementieren, da bei diesen die Stationarität der Teilnehmerstationen 3 und die Existenz eines Dienstkanals, der den teilnehmerabhängigen Zugriff auf den Funkkanal steuert, vorteilhaft ausgenutzt werden.

Bezugszeichenliste

1) Funkübertragungssystem
2) Funkbasisstation
3) Teilnehmerstation
4) Senderichtung (downlink)
5) Senderichtung (uplink)
6) DS-CDMA-Modulator
7) Mischer
8) Sender
9) Sendeantenne
10) DS-CDMA-Demodulator
11) Schaltmatrix
12) Controller

13) Bewertungseinheit
14) digitaler Bus
15) Empfänger
16) Empfangsantenne
17) Leistungsteiler
18) TX-RX-Switch-Modul
19) Testsequenz
20) Testsequenz

**Patentansprüche**

1. Vorrichtung für ein vollduplexfähiges Funkübertragungssystem mit DS-CDMA-Zugriff, umfassend eine zentrale Funkbasisstation und eine Vielzahl voneinander unabhängiger Teilnehmerstationen, die jeweils mit mindestens einer Sende- und Empfangsantenne ausgebildet sind, **dadurch gekennzeichnet, daß** die Empfangsantenne (16) der Funkbasisstation (2) in ihrer horizontalen Antennencharakteristik in mehrere Empfangssegmente unterteilt ist, die Empfangssegmente mit einer Bewertungseinheit (13) verbunden sind, mittels derer teilnehmerbezogen das Empfangssegment mit der besten Empfangsqualität ermittelbar und für die weitere Datenverarbeitung auswählbar ist, wobei die Sendeantenne (9) der Funkbasisstation (2) in ihrer Antennencharakteristik unsegmentiert ist.

2. Vorrichtung nach Anspruch 1, **dadurch gekennzeichnet, daß** die horizontale Antennencharakteristik im Verhältnis X der downlink- zur uplink-Übertragungskapazität unterteilt ist.

3. Vorrichtung nach Anspruch 1 oder 2, **dadurch gekennzeichnet, daß** für jedes Empfangssegment eine separate Antenne vorgesehen ist.

4. Vorrichtung nach Anspruch 1 oder 2, **dadurch gekennzeichnet, daß** die Empfangsantenne (16) als strahlungsgesteuerte Antenne ausgebildet ist.

5. Verfahren zur Datenübertragung für ein vollduplexfähiges Funkübertragungssystem (1) mit DS-CDMA-Zugriff, mittels einer Vorrichtung nach einem der vorangegangenen Ansprüche, umfassend folgende Verfahrensschritte:

   a) Aufbauen einer Verbindung über einen Dienstkanal parallel für alle Empfangssegmente der Funkbasisstation (2),
   b) Übergeben der empfangenen Daten an die Bewertungseinheit (13),
   c) Vergleichen, in welchem der Empfangssegmente die Daten einer jeweiligen Teilnehmerstation (3) am besten empfangen werden,
   d) Übergeben des für die jeweilige Teilnehmerstation (3) ermittelten Empfangssegments an einen Controller (12) der Funkbasisstation (2) und

   e) Auswählen des besten Empfangssegmentes für die jeweilige Teilnehmerstation (3) durch den Controller (12),
   f) wobei für den Datenempfang in der Funkbasisstation (2) nur das teilnehmerspezfisch ausgewählte Empfangssegment und für die Datensendung die gesamte unsegmentierte Antennencharakteristik der Sendeantenne (9) der Funkbasisstation (2) verwendet wird.

6. Verfahren nach Anspruch 5, **dadurch gekennzeichnet, daß** die Teilnehmerstationen (3) vor der eigentlichen Nutzdatenübertragung ein teilnehmerspezifisches Testsignal an die Funkbasisstation (2) senden, aus dem das optimale Empfangssegment ermittelt wird.

7. Verfahren nach Anspruch 6, **dadurch gekennzeichnet, daß** das Funksystem (1) im Time Division Duplex-Modus betrieben wird und das Testsignal in der Totzeit zwischen Sende- und Empfangszyklus der eigentlichen Nachrichtenübertragung gesendet wird.

8. Verfahren nach Anspruch 7, **dadurch gekennzeichnet, daß** die Funkbasisstation (2) in der Totzeit Testsequenzen an die einzelnen Teilnehmerstationen (3) sendet.

9. Verfahren nach Anspruch 7 oder 8, **dadurch gekennzeichnet, daß** die einzelnen Testsequenzen von oder für die Teilnehmerstationen (3) zyklisch sequentiell gesendet werden.

**Claims**

1. Apparatus for a full-duplex radio transmission system having DS-CDMA access, including a central radio base station and a plurality of subscriber stations, which are independent of one another and are each provided with at least one transmitting and receiving antenna, **characterised in that** the receiving antenna (16) of the radio base station (2) has its horizontal antenna characteristic divided into a plurality of receiving segments, which receiving segments are connected to a valuation unit (13), by means of which the receiving segment with the best receiving quality can be determined for the subscriber and is selectable for further data-processing, the transmitting antenna (9) of the radio base station (2) not being segmented in respect of its antenna characteristic.

2. Apparatus according to claim 1, **characterised in**

**that** the horizontal antenna characteristic is divided in the ratio X of the downlink-to-uplink transmission capacitance.

3. Apparatus according to claim 1 or 2, **characterised in that** a separate antenna is provided for each receiving segment.

4. Apparatus according to claim 1 or 2, **characterised in that** the receiving antenna (16) is in the form of a radiation-controlled antenna.

5. Method of transmitting data for a full-duplex radio transmission system (1) with DS-CDMA access, by means of an apparatus according to one of the preceding claims, said method including the following method steps:

   a) creating a connection via a service channel parallel to all of the receiving segments of the radio base station (2),
   b) transferring the received data to the valuation unit (13),
   c) comparing to determine in which of the receiving segments the data of one particular subscriber station (3) are best received,
   d) transferring the receiving segment, determined for the particular subscriber station (3), to a controller (12) of the radio base station (2), and
   e) selecting the best receiving segment for the particular subscriber station (3) by the controller (12),
   f) wherein only the receiving segment, selected specifically for the subscriber, is used for receiving data in the radio base station (2), and the entire unsegmented antenna characteristic of the transmitting antenna (9) of the radio base station (2) is used for transmitting data.

6. Method according to claim 5, **characterised in that**, prior to the action useful data transmission, the subscriber stations (3) transmit to the radio base station (2) a test signal which is specific to the subscriber, and from which signal the optimum receiving segment is determined.

7. Method according to claim 6, **characterised in that** the radio system (1) is operated in the Time Division Duplex mode, and the test signal is transmitted in the dead time between transmitting cycle and receiving cycle of the actual transmission of information.

8. Method according to claim 7, **characterised in that** the radio base station (2) transmits, in the dead time, test sequences to the individual subscriber stations (3).

9. Method according to claim 7 or 8, **characterised in that** the individual test sequences are cyclically sequentially transmitted from or for the subscriber stations (3).

**Revendications**

1. Dispositif de transmission radio en full duplex avec accès DS-CDMA, comprenant une station radio de base centrale et une pluralité de postes d'abonnés indépendants les uns des autres, qui sont respectivement conçus avec au moins une antenne émettrice et une antenne réceptrice, **caractérisé en ce que**
   l'antenne réceptrice (16) de la station radio de base (2) est répartie au niveau de sa caractéristique d'antenne horizontale, en plusieurs *segments* récepteurs, qui sont reliés à une unité d'évaluation (13), au moyen de laquelle, en ce qui concerne l'abonné, le segment récepteur peut être détecté avec la meilleure qualité de réception possible et peut être choisi pour le traitement de données ultérieur, moyennant quoi l'antenne émettrice (9) de la station radio de base (2) est non segmentée au niveau de sa caractéristique d'antenne.

2. Dispositif selon la revendication 1, **caractérisé en ce que** la caractéristique d'antenne horizontale est répartie *selon* un rapport X de la capacité de transmission downlink vers uplink.

3. Dispositif selon la revendication 1 ou 2, **caractérisé en ce qu'**une antenne séparée est prévue pour chaque segment récepteur.

4. Dispositif selon la revendication 1 ou 2, **caractérisé en ce que** l'antenne réceptrice (16) est conçue sous forme d'antenne attaquée indirectement.

5. Procédé destiné à transmettre des données pour un système de transmission radio en full duplex (1) avec accès DS-CDMA, au moyen d'un dispositif selon l'une des revendications précédentes, comprenant les étapes de procédé suivantes consistant à :

   a) établir une liaison par l'intermédiaire d'un canal de service parallèle pour la totalité des segments récepteurs de la station radio de base (2),
   b) transmettre les données reçues à l'unité d'évaluation (13),
   c) comparer dans lequel des segments récepteurs les données d'un poste d'abonné respectif (3) sont les mieux reçues,
   d) transmettre le segment récepteur détecté pour le poste d'abonné respectif (3) à une unité de contrôle (12) de la station radio de base (2) et

e) sélectionner le meilleur segment récepteur pour le poste d'abonné respectif (3) au moyen de l'unité de contrôle (12),

f) moyennant quoi seul le segment récepteur sélectionné de manière spécifique à l'abonné est utilisé pour la réception de données dans la station radio de base (2) et moyennant quoi toute la caractéristique d'antenne non segmentée de l'antenne émettrice (9) de la station radio de base (2) est utilisée pour l'émission de données.

6. Procédé selon la revendication 5, **caractérisé en ce que** les postes d'abonnés (3) envoient, avant la transmission de données utiles proprement dites, un signal test spécifique à l'abonné à la station radio de base (2), à partir duquel signal on détecte le segment récepteur optimal.

7. Procédé selon la revendication 6, **caractérisé en ce que** le système radio (1) est actionné en mode duplex à répartition dans le temps et **en ce que** le signal test est envoyé pendant le temps mort compris entre le cycle d'émission et le cycle de réception de la transmission de messages proprement dite.

8. Procédé selon la revendication 7, **caractérisé en ce que** la station radio de base (2) envoie des séquences test aux différents postes d'abonnés (3) pendant le temps mort.

9. Procédé selon la revendication 7 ou 8, **caractérisé en ce que** les différentes séquences test sont envoyées de manière cyclique/séquentielle à partir de ou aux postes d'abonnés (3).

EP 1 086 537 B1

# FIG.1

# FIG.2

# FIG.3

# FIG.4a    FIG.4b

FIG.5

# FIG.6

# FIG.7a

# FIG.7b